(19) Europäisches Patentamt
European Patent Office
Office européen des brevets

(11) **EP 2 256 665 B1**

(12) **EUROPÄISCHE PATENTSCHRIFT**

(45) Veröffentlichungstag und Bekanntmachung des Hinweises auf die Patenterteilung:
**07.01.2015 Patentblatt 2015/02**

(51) Int Cl.:
***G06K 7/14*** *(2006.01)*

(21) Anmeldenummer: **10401052.5**

(22) Anmeldetag: **13.04.2010**

(54) **Verfahren und Vorrichtung zum Erkennen von Strichcodezeichen**

Device and method for detecting barcode symbols

Procédé et dispositif destinés à la reconnaissance de symboles de codes barres

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.05.2009 DE 102009025869**

(43) Veröffentlichungstag der Anmeldung:
**01.12.2010 Patentblatt 2010/48**

(73) Patentinhaber: **Wincor Nixdorf International GmbH**
**33106 Paderborn (DE)**

(72) Erfinder:
• **Jokhovets, Lioubov**
**98693 Ilmenau (DE)**
• **Seitz, Reiner**
**10115 Berlin (DE)**

(56) Entgegenhaltungen:
EP-A2- 1 260 933     WO-A1-02/101634
DE-A1- 19 504 912     US-A- 6 094 509

**Beschreibung**

Die Erfindung betrifft ein Verfahren zum Erkennen von Strichcodezeichen aus einer Folge von hellen und dunklen Strichelementen, wobei die Folge von hellen und dunklen Strichelementen optisch erfasst wird unter Bildung eines Grauwertbildes, dass Bildelemente des Grauwertbildes zu einem binären Signal umgewandelt werden, dem das Strichcodezeichen zugewiesen wird.

Ferner betrifft die Erfindung eine Vorrichtung zum Erkennen von Strichcodezeichen aus einer Folge von hellen und dunklen Strichelementen mit einer optischen Abtasteinheit zum Abtasten der Strichelemente und Bereitstellen eines Grauwertbildes und mit einer Dekodiereinheit zur Ermittlung der Strichcodezeichen aus dem Grauwertbild.

Strichcodezeichen bzw. Balkencode- oder Barcodezeichen sind zur Kennzeichnung von Produkten oder Gegenständen seit langem bekannt.

In der WO 02/101634, das den Oberbegriff der Ansprüche 1 und 5 bildet, wird ein System und eine Methode zur Erzeugung und Dekodierung von grafischen Barcodes, die sich durch eine hohe Informationskapazität und gute Lesbarkeit auszeichnen, beschrieben. Dies wird durch eine XOR-Operation des Originalcodes mit vorgegebenen Codemasken erreicht. Die inverse Operation, angewandt auf den erfindungsgemäß erzeugten Barcode, generiert dann wieder den Ausgangiscode.

Aus der DE 195 04 912 A1 ist ein Verfahren bzw. eine Vorrichtung zum Erkennen von Strichcodezeichen aus einer Folge von hellen und dunklen Strichelementen bekannt, bei dem die gleichen Strichelemente eines Strichcodezeichens mehrmals abgetastet werden. Sofern die Abtastungen aufgrund von Lesefehlern nicht vollständig sind, werden jeweils die Bildelemente eines Grauwertbildes repräsentierenden binären Signalfolgen miteinander auf Überein- stimmung geprüft. Bei dieser bitweisen Überprüfung wird als Ergebnis ein solcher Bitwert einer resultierenden Bitfolge übernommen, der am meisten vorgekommen ist. Voraussetzung hierfür ist, dass mindestens drei Abtastungen des Grauwertbildes und somit drei aufeinanderfolgende Bitfolgen des Grauwertbilddes vorliegen. Nachteilig an dem bekannten Verfahren bzw. der Vorrichtung ist, dass mehrere Abtastungen der gleichen Strichelemente für die Bestimmung des Strichcodezeichens erforderlich sind.

Aufgabe der vorliegenden Erfindung ist es daher, ein Verfahren und eine Vorrichtung zum Erkennen von Strichcodezeichen derart weiterzubilden, dass eine relativ schnelle und sichere Strichcodeerkennung gewährleistet ist, die zuverlässig gegen Rauschen und Fremdlichtstörungen ist.

Gelöst wird diese Aufgabe durch ein Verfahren gemäß dem Anspruch 1 und durch eine Vorrichtung gemäß dem Anspruch 5.

Patentanspruch 1 beschreibt, dass ein Anfangsbildelement (4.1) des Grauwertbildes (2) ermittelt wird, und dass dann für die ieweils folgenden Bildelemente (4.i) des Grauwertbildes (2) Werte ($g_i$) der Bildelemente (4.i) gebildet werden, die ieweils mit Gewichtungsfaktoren ($A_k$) der Masken ($M_k$) zu Gewichtungswerten multipliziert werden, und dassdem Grauwertbild (2) das Strichcodezeichen derjenigen Maske($M_k$) zugeordnet wird, mittels derer sich aus den berechneten Gewichtungswerten die größte Gewichtunassumme ($E_{Ak-max}$) ergibt.

Dabei werden erfindungsgemäß unter Strichcodezeichen sowohl eindimensionale Codes als auch zweidimensionale Codes (beispielsweise Stapel- oder Matrixcodes) verstanden.

Vorteilhaft ermöglicht die Erfindung die Bestimmung eines Anfangsbildelement des Grauwertbildes, so dass die Signalfolge des ein bestimmtes Strichcodezeichen repräsentierenden Grauwertbildes festgelegt ist. Das somit festgelegte Signal des Grauwertbildes wird nun mit der vorgegebenen Anzahl von Masken auf Übereinstimmung überprüft, wobei den Bildelementen des Grauwertbildes jeweils Gewichtungsfaktoren der Masken zugewiesen werden. Aus den Bildelementen werden jeweils Werte, vorzugsweise Grauwertstufen, ermittelt, die mit den zugehörigen Gewichtsfaktoren der entsprechenden Masken zu Gewichtungswerten multipliziert werden. Für jede Maske werden entsprechende Gewichtungswerte zu einer Gewichtungssumme aufaddiert. Die auf das Grauwertbild angewendete Maske mit der höchsten Gewichtungssumme bildet die Übereinstimmungsmaske, deren vorgegebenes Strichcodezeichen als das Strichcodezeichen des Grauwertbildes erkannt wird. Dem aktuellen Grauwertbild kann somit nun das Strichcodezeichen zugeordnet werden. Vorteilhaft können zur Auswertung des Strichcodes alle Bildelemente des Grauwertbildes herangezogen werden. Bei Bestimmung der Bildelementwerte des Grauwertbildes wird vorzugsweise über die Länge eines Bildelementes der Mittelwert über die Grauwerte gebildet, so dass nicht nur Maxima und Minima bzw. Nulldurchtritte der Bildelemente, sondern quasi die gesamten Bildelemente für die Erkennung des Strichcodezeichens verwendet werden. Die Gewichtungsfaktoren können beispielsweise einen Wert zwischen "-2" und "+2" haben.

Nach einer bevorzugten Ausführungsform der Erfindung sind die Gewichtsfaktoren der Masken auf das Signal der Bildelemente normiert, so dass das Erkennungsergebnis nicht durch die absoluten, sondern durch die relativen Werte der Bildelemente bestimmt wird.

Vorteilhaft ermöglicht die Erfindung eine relativ schnelle und sichere Strichcodeerkennung. Nach der Erfindung sind in Abhängigkeit von dem aktuell verwendeten Strichcode eine Mehrzahl von Masken vorgesehen, die jeweils unterschiedliche Strichcodezeichen kennzeichnen. Ein aktuell abgetastetes Grauwertbild mit einer Mehrzahl von Bildelementen wird mit den vorhandenen Masken auf Übereinstimmung geprüft. Diejenige Maske, die den höchsten Übereinstimmungsgrad mit dem aktuellen Grauwertbild aufweist, wird als Übereinstimmungsmaske erkannt, so dass dem aktuellen Grauwertbild das Strichcodezeichen dieser Übereinstimmungsmaske zugeordnet wird. Es findet somit eine Filterung bzw. Korrelation statt, bei der vorzugsweise alle Bildelemente des Grauwertbildes ausgewertet werden. Grundgedanke der Erfindung ist es somit, ein vorhandenes Grauwertbild auf Ähnlichkeit mit vorgegebenen, vorzugsweise als diskrete und/oder digitale Folge ausgebildeten Masken zu überprüfen und diejenige Maske mit dem höchsten Übereinstimmungsgrad auszuwählen, um das Strichcodezeichen dieses Grauwertbildes zu erkennen.

Patentanspruch 5 beschreibt, dass die Korrelationseinrichtung (8) einen Multiplizierer (9) und einen Addierer (11) und einen Vergleicher (12) aufweist, so dass Werte ($g_i$) der Bildelemente (4) eines Grauwertbildes (2) mit zugehörigen Gewichtungsfaktoren ($A_K$) der Masken (M) zu Gewichtungswerten multipliziert werden, und dass die Gewichtungswerte derselben Masken ($M_k$) aufaddiert werden zu einer Gewichtungssumme ($E_{Ak}$), und dass das überprüfte Grauwertbild (2) einem solchen Strichcodezeichen zugewiesen wird, dessen Maske ($M_k$) die höchste Gewichtungssumme ($E_{max}$) aufweist.

In der Korrelationseinrichtung, die Bestandteil der Dekodiereinheit ist, werden Bildelemente der jeweiligen Grauwertbilder mit einer Anzahl von jeweils einer Strichcodezeichen kennzeichnenden Maske auf Übereinstimmung geprüft und dem überprüften Grauwertbild dasjenige Strichcodezeichen zugeordnet, dessen Maske den höchsten Übereinstimmungsgrad mit dem Grauwertbild aufweist.

Der besondere Vorteil der erfindungsgemäßen Vorrichtung besteht darin, dass mittels einer Korrelationseinrichtung aus vorhandenen Bildelementdaten eines Grauwertbildes relativ schnell und zuverlässig ein Strichcodezeichen ermittelbar ist. Die abgetastete Signalfolge von Bildelementen wird mit einer Anzahl von jeweils unterschiedlichen Strichcodezeichen repräsentierenden Masken verglichen, wobei diejenige Maske als Übereinstimmungsmaske ausgewählt wird, die den höchsten Übereinstimmungsgrad mit der Signalfolge der Bildelemente aufweist. Zur Bestimmung des Strichcodezeichens wird somit die Maske mit dem höchsten Übereinstimmungsgrad verwendet, wobei die Masken jeweils als wertdiskretes, vorzugsweise zeitkontinuierliches Vergleichssignal, bzw. als digitales, insbesondere binäres Signal vorliegen.

Nach einer bevorzugten Ausführungsform der erfindungsgemäßen Vorrichtung weist die Korrelationseinrichtung einen Speicher zur Abspeicherung der unterschiedlichen Masken auf, in dem die Folgen von Gewichtsfaktoren bezogen auf eine Länge des Bildelementes (Bildpixellänge) abgespeichert sind. Der Speicher dient somit als Maskenvorrat, der pixelweise entsprechende Gewichtungsfaktoren einem jeweils einer Maske zugeordneten Multiplizierer zuführt. An den anderen Eingang des Multiplizierers werden pixelweise die Bildelementdaten des Grauwertbildes zugeführt. Durch die maskenweise Multiplikation der Gewichtsfaktoren und anschließender Aufsummierung der so gebildeten Gewichtungswerte zu einer Gewichtungssumme lässt sich in einem Vergleicher der Korrelationseinrichtung die maximale Gewichtungssumme bestimmen. Die Maske mit der maximalen Gewichtungssumme repräsentiert das gesuchte Strichcodezeichen. Vorteilhaft können relativ schnell und sicher durch Kombination von digitalen Signalverarbeitungseinheiten die abgetasteten Grauwertbilder erkannt werden.

Weitere Vorteile der Erfindung ergeben sich aus den weiteren Unteransprüchen.

Ein Ausführungsbeispiel der Erfindung wird nachfolgend anhand der Figur näher erläutert.

Es zeigen:

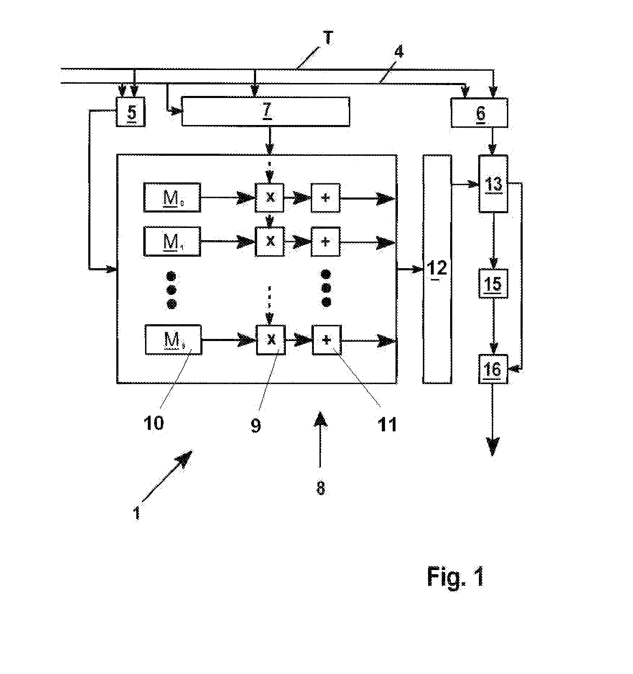

Figur 1    ein Blockschaltbild einer erfindungsgemäßen Vorrichtung zum Erkennen von Strichcodezeichen mit einer Dekodiereinheit,

Figur 2    eine Darstellung eines einen Strichcodezeichen repräsentierenden Grauwertbildes sowie eine abgetastete Signalfolge des Grauwertbildes und

Figur 3    eine Darstellung einer abgetasteten Signalfolge des Grauwertbildes gemäß Figur 2 (gestrichelt), wobei Bildelementwerte in Abhängigkeit von der Grauwertstufung bestimmt werden und den Bildelementwerten jeweils Gewichtungsfaktoren von unterschiedlichen Masken zugeordnet werden.

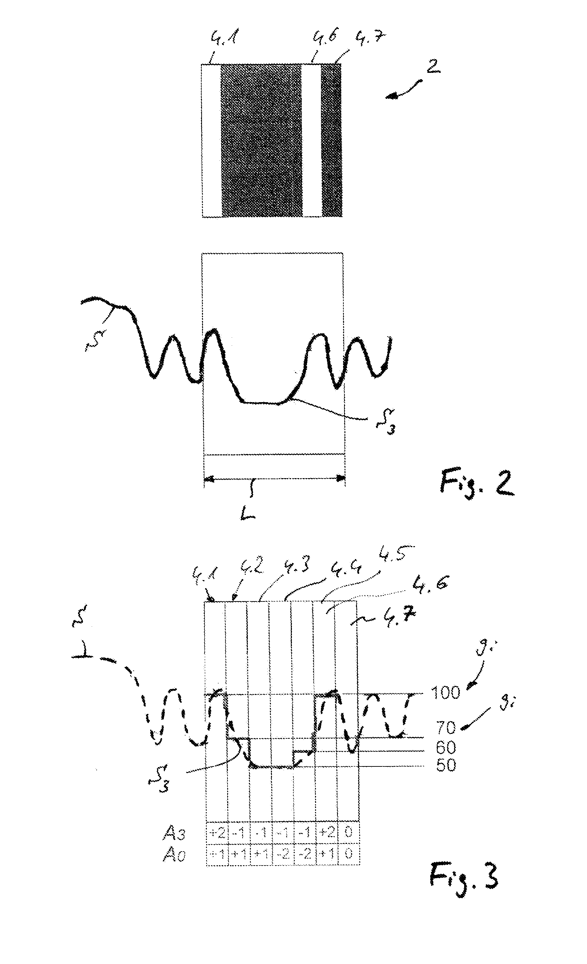

Eine Vorrichtung zum Erkennen von Strichcodezeichen aus einer Folge von hellen und dunklen Strichelementen besteht im Wesentlichen zum einen aus einer nicht dargestellten optischen Abtasteinheit zum Abtasten der Strichelemente und Bereitstellen eines Grauwertbildes 2 und zum anderen aus einer Dekodiereinheit 1, mittels derer das entsprechende Strichcodezeichen aus dem Grauwertbild 2 ermittelt wird. Die optische Abtasteinheit ist vorzugsweise als eine Kamera, beispielsweise CCD-Kamera, ausgebildet, mittels derer beispielsweise ein Grauwertbild 2 gemäß Figur 2 erfasst werden kann. Das Grauwertbild 2 gemäß Figur 2 repräsentiert das Strichcodezeichen "3" eines A-Codes. Der A-Code ist beispielsweise als UPC-A-Code bekannt, der ein numerischer Code ist, in dem die Ziffern "Null" bis "Neun" darstellbar sind. Jedes Strichcodezeichen ist aus zwei Strichen und zwei Lücken aufgebaut. Der UPC-A-Code ist dem EAN-Code, der über dreizehn Strichcodeziffern verfügt, ähnlich. Der EAN-Code wird hauptsächlich in Lebensmittelsupermärkten verwendet, wobei Verpackungen der Erzeugnisse mit der europäischen Artikelnummer (EAN), als Strichcode verschlüsselt, bedruckt sind.

Wie aus Figur 2 ersichtlich ist, liegt das Grauwertbild 2 als ein wert- und zeitkontinuierliches Signal S vor, wobei aus den Amplitudenwerten des Signals S Graustufenwerte g als Funktion des Ortes ermittelt sind.

Die Dekodiereinheit 1 soll aus einem Signal $S_3$ des Grauwertbildes 2 der Länge L das durch das Grauwertbild 2 repräsentierte Strichcodezeichen "Ziffer 3" des A-Codes wiedergeben, das aus sieben Bildelementen 4 der Folge "hell (4.1), dunkel (4.2), dunkel (4.3), dunkel (4.4), dunkel (4.5), hell (4.6), dunkel (4.7)" besteht. Die Bildelemente 4.1, 4.2, 4.3, 4.4, 4.5, 4.6, 4.7 weisen jeweils eine Breite von L/7 auf, wobei L die Länge des das Grauwertbild 2 repräsentierenden Signals $S_3$ für die Strichcodeziffer drei ist.

Damit das Signal $S_3$ für die beispielhaft angegebene Strichcodeziffer "3" ermittelt werden kann, weist die Dekodiereinheit 1 eine Einrichtung 5 zur Ermittlung der Länge der Strichcodeziffer sowie eine Einrichtung 6 zur Ermittlung eines Anfangsbildelementes 4.1 des Signals $S_3$ auf. Zur Ermittlung des Strichcodezeichens "3" wird somit das in Figur 2 dargestellte Fenster betrachtet, in dem sich das Signal $S_3$ erstreckt.

Weiterhin weist die Dekodiereinheit 1 ein Schieberegister 7 auf, mittels dessen die ermittelten Graustufenwerte $g_i$ des Signals $S_3$ nacheinander einer Korrelationseinrichtung 8 der Dekodiereinheit 1 zugeführt werden. Wie aus Figur 3 ersichtlich ist, werden jeweils über die Bildelementlänge L/7 Mittelwerte berechnet, die den Graustufenwert $g_i$ bzw. den Wert der Bildelemente 4.i wiedergeben, wobei i = 1 ...7 die Anzahl der Bildelemente bzw. Pixel von Signal $S_3$ ist. Somit ergibt sich für das Anfangsbildelement 4.1 ein mittlerer Graustufenwert $g_1$ von "100", für das zweite Bildelement 4.2 der Graustufenwert $g_2$ von "70", für das dritte Bildelement 4.3 und für das vierte Bildelement 4.4 der Graustufenwert $g_3$ und $g_4$ von jeweils "50", für das fünfte Bildelement 4.5 der Graustufenwert $g_5$ von "60", für das sechste Bildelement 4.6 der Graustufenwert $g_6$ von "100", für das siebte Bildelement 4.7 der Graustufenwert $g_7$ von "70".

Die wertdiskreten Graustufenwerte $g_i$ der Bildelemente 4 werden vorzugsweise als binäre Signale mittels des Schieberegisters 7 einer Mehrzahl von Multiplizierern 9 der Korrelationseinrichtung 8 zugeführt. An den anderen Eingang der Multiplizierer 9 liegen Werte von Masken $M_0$, $M_1$, ... $M_9$ an. Die Masken $M_0$, $M_1$ ... $M_9$ sind in einem Speicher 10 der Korrelationseinrichtung 8 abgelegt und repräsentieren durch eine Folge von Gewichtungsfaktoren $A_K$ jeweils unterschiedliche Strichcodezeichen k, wobei k = 0 ... 9 ist. Beispielsweise repräsentiert die Maske $M_0$ das Strichcodezeichen "0" sowie die Maske $M_3$ das Strichcodezeichen "3".

In der Korrelationseinrichtung 8 wird das aktuelle Signal $S_3$ des Grauwertbildes 2 mit den Masken $M_0$, $M_1$ ... $M_9$ verglichen, so dass in Abhängigkeit von dem Übereinstimmungsgrad zwischen den einzelnen Masken einerseits und der Folge von Bildelementen 4 andererseits das Strichcodezeichen ermittelt wird. Dem jeweiligen Multiplizierer 9 ist ein Addierer 11 nachgeordnet, so dass in Abhängigkeit von den jeweiligen Masken $M_0$, $M_1$ ... $M_9$ Gewichtssummen $E_{A0}$, $E_{A1}$, $E_{A2}$, ... $E_{A9}$ berechnet werden können. Die Gewichtungssummen $E_{Ak}$ werden nach folgender Formel bestimmt:

$$E_{Ak} = \sum_{i=0}^{L-1} A_k(i) \cdot g_k(i) \,,$$

wobei

$A_K$ = Gewichtungsfaktoren der Masken $M_k$
$g_K$ = mittlerer Graustufenwert der Bildelemente 4.i (Pixel 4.i)
i = Pixelzahl
k = O, 1, ... 9 Anzahl der Masken $M_K$.

Gleichsam wie ein Schablonenfilter werden die Masken $M_0$ ... $M_9$ über das Signalfenster $S_3$ "gelegt", wobei in Figur 3 beispielhaft die Gewichtsfaktoren $A_3$ der Maske $M_3$ für die Ziffer "3" und die Gewichtsfaktoren $A_0$ der Maske $M_0$ für die Ziffer "0" dargestellt sind. Bei Anwendung der Gleichung $E_{Ak}$ werden pixelweise Gewichtungswerte durch Multiplikation der Gewichtungsfaktoren $A_k$ und der Grauwertstufen $g_k$ gebildet, die zu Gewichtssummenwerten $E_{Ak}$ aufsummiert werden. Es ergeben sich für die Masken $M_3$ und $M_0$ folgende Werte:

$$E_{Ao} = 1 \cdot 100 + 1 \cdot 70 + 1 \cdot 50 - 2 \cdot 50 - 2 \cdot 60 + 1 \cdot 100 = 100$$

$$E_{A3} = 2 \cdot 100 - 1 \cdot 70 - 1 \cdot 50 - 1 \cdot 50 - 1 \cdot 60 + 2 \cdot 100 = 170$$

Während für die Maske $M_0$ die Gewichtssumme "100" beträgt, ergibt sich für die Maske $M_3$ ein Wert von "170", der größer ist als die Gewichtssummen der weiteren Masken M. Zur Ermittlung des maximalen Gewichtssummenwertes $E_{Amax}$ ist dem Addierer 11 ein Vergleicher 12 nachgeschaltet, der aus den ermittelten Gewichtssummenwerten $E_{A0}$ bis $E_{A9}$ den maximalen Wert $E_{Amax} = E_{A3}$ ermittelt. Der Signalfolge $S_3$ wird somit die Maske $M_3$ zugeordnet, die die Ziffer "3" repräsentiert.

Zur Bestimmung des maximalen Gewichtssummenwertes wird die die entsprechende Maske $M_3$ repräsentierende Ziffer "3" in ein Register 13 geschrieben. An dem Eingang des Registers 13 liegt darüber hinaus die Einrichtung 6 zur Ermittlung der Start-/Stopposition der Strichcodeziffer. Eingangsseitig werden dieser Einrichtung 6, dem Schieberegister 7 sowie der Einrichtung 5 nicht nur die Bildelementdaten 4, sondern auch ein Bildelementtakt T zugeführt.

Alle Strichcodezeichen werden nacheinander bestimmt. Anschließend wird das Ergebnis in dem Register 13 abgespeichert. In einer Einrichtung 15 wird die erste Strichcodeziffer bestimmt und nach Kontrolle der Prüfsumme in Einrichtung 16 ein gültiges Strichcodezeichen ausgegeben. Der gelesene EAN-Code wird nur dann akzeptiert, wenn die so gebildete Prüfsumme ohne Rest durch zehn teilbar ist.

Nach einem weiteren Ausführungsbeispiel der Erfindung kann die Korrelationseinrichtung 8 einen weiteren Block aufweisen, in dem Masken für einen Code B abgespeichert sind. Die Überprüfung der Bildelemente 4 auf Übereinstimmung mit einer Maske des Codes B kann sequentiell oder gleichzeitig mit der Überprüfung der Masken $M_0$ - $M_9$ des Codes A erfolgen. Darüber hinaus kann auch eine weitere Maskencodetabelle C vorgesehen sein, die sich aus Überlagerung der Masken $M_0$ - $M_9$ für Code A und Masken für Code B ergeben. Der Code A ergibt sich aus dem Code C, indem die jeweiligen Stellen der Bildelemente negiert werden. Code B ergibt sich aus Code C, indem die Reihenfolge von hell und dunkel genau umgekehrt wird. Infolgedessen kann zur Bestimmung des Codes C beim Lesen der Bildelemente vorwärts die gleiche Maske wie für Code A mit negierten Koeffizienten verwendet werden.

Es ist ersichtlich, dass die Erfindung nicht lediglich die Bildelemente 4 des Signals $S_3$ hinsichtlich von Maxima und Minima einerseits und/oder Nulldurchtritten andererseits erkennt. Es fließt der gesamte Wert der Bildelemente 4 ein, so dass eine relativ hohe Sicherheit gegenüber Fremdlichtstörungen, Rauschen und Strichcodeverzerrungen gegeben ist.

**Bezugzeichenliste**

| | | | |
|---|---|---|---|
| 1 | Dekodiereinheit | $g_i$ | Grauwertstufen |
| 2 | Grauwertbild | S | Signal |
| 4 | Bildelemente | $S_3$ | Signal für Ziffer "3" |
| 5 | Einrichtung | L/7 | Länge Bildelement |
| 6 | Einrichtung | $M_{0..9}$ | Masken |
| 7 | Schieberegister | $E_{0..9}$ | Gewichtssumme |
| 8 | Korrelationseinrichtung | $A_{0..9}$ | Gewichtungsfaktor |
| 9 | Multiplizierer | T | Bildelementtakt |
| 10 | Speicher | A | Code |
| 11 | Addierer | B | Code |
| 12 | Vergleicher | C | Code |
| 13 | Register | | |
| 14 | ----- | | |
| 15 | Einrichtung | | |
| 16 | Einrichtung | | |

**Patentansprüche**

1. Verfahren zum Erkennen von Strichcodezeichen aus einer Folge von hellen und dunklen Strichelementen, wobei die Folge von hellen und dunklen Strichelementen unter Bildung eines Grauwertbildes optisch erfasst wird, das Grauwertbild in Bildelemente aufgeteilt wird, die Bildelemente des Grauwertbildes zu einem digitalen Signal umgewandelt werden, dem das Strichcodezeichen zugewiesen wird, das Grauwertbild (2) mit einer Anzahl von jeweils unterschiedliche Strichcodezeichen kennzeichnende Masken $M_k$ auf Übereinstimmung verglichen wird und das Strichcodezeichen aus der Maske $M_k$ bestimmt wird, die den höchsten Übereinstimmungsgrad mit dem Grauwertbild (2) aufweist, **dadurch gekennzeichnet, dass**
   jeder Maske $M_k$ Gewichtungsfaktoren $A_k$ zugeordnet werden, dass
   ein Anfangsbildelement (4.1) des Grauwertbildes (2) ermittelt wird, und dass dann für das Anfangsbildelement und für die jeweils folgenden Bildelemente (4.i) des Grauwertbildes (2) Graustufenwerte gi der Bildelemente (4.i) gebildet werden, die jeweils mit den Gewichtungsfaktoren $A_k$ der Masken $M_k$ zu Gewichtungswerten multipliziert werden, und

dass dem Grauwertbild (2) das Strichcodezeichen derjenigen Maske $M_k$ zugeordnet wird, bei der sich aus den berechneten Gewichtungswerten die größte Gewichtungssumme $E_{Akmax}$ ergibt.

**2.** Verfahren nach Anspruch 1, **dadurch gekennzeichnet, dass** das Grauwertbild (2) sequentiell und/oder gleichzeitig mit der Anzahl von Masken $M_k$ verglichen wird, wobei die Masken $M_k$ jeweils normiert sind auf das Signal der Bildelemente (4.i).

**3.** Verfahren nach einem der Ansprüche 1 bis 2, **dadurch gekennzeichnet, dass** das Grauwertbild (2) gleichzeitig mit der Anzahl k der Masken $M_k$ eines vorbestimmten Strichcodes (A, B, C) verglichen wird.

**4.** Verfahren nach einem der Ansprüche 1 bis 3, **dadurch gekennzeichnet, dass** die Graustufenwerte $g_i$ der Bildelemente (4) durch Bildung eines Mittelwertes über ein vorgegebenes Zeitintervall des Bildelementes (4) ermittelt wird.

**5.** Vorrichtung zum Erkennen von Strichcodezeichen aus einer Folge von hellen und dunklen Strichelementen mit einer optischen Abtasteinheit zum Abtasten der Strichelemente und Bereitstellen eines Grauwertbildes und mit einer Dekodiereinheit zur Ermittlung der Strichcodezeichen aus dem in Bildelemente aufgeteilte Grauwertbild, wobei die Dekodiereinheit (1) eine Korrelationseinrichtung (8) aufweist, in der die Bildelemente (4) der jeweiligen Grauwertbilder (2) mit einer Anzahl von jeweils ein Strichcodezeichen kennzeichnenden Maske $M_k$ auf Übereinstimmung geprüft wird, und dem überprüften Grauwertbild (2) dasjenige Strichcodezeichen zugeordnet wird, dessen Maske $M_k$ den höchsten Übereinstimmungsgrad mit dem Grauwertbild (2) aufweist, und die Korrelationseinrichtung (8) einen Speicher (10) zur Abspeicherung der unterschiedlichen Masken $M_k$ aufweist, wobei den Masken $M_k$ Folgen von Gewichtsfaktoren $A_k$ zugeordnet sind, die jeweils unterschiedliche Strichcodezeichen definieren, **dadurch gekennzeichnet, dass** die Korrelationseinrichtung (8) einen Multiplizierer (9) und einen Addierer (11) und einen Vergleicher (12) aufweist, so dass Graustufenwerte $g_i$ der Bildelemente (4) eines Grauwertbildes (2) mit zugehörigen Gewichtungsfaktoren $A_k$ der Masken $M_k$ zu Gewichtungswerten multipliziert werden, und dass die Gewichtungswerte derselben Masken $M_k$ aufaddiert werden zu einer Gewichtungssumme $E_{Ak}$ und dass das überprüfte Grauwertbild (2) einem solchen Strichcodezeichen zugewiesen wird, dessen Maske $M_k$ die höchste Gewichtungssumme $E_{Akmax}$ aufweist.

**6.** Vorrichtung nach Anspruch 5, **dadurch gekennzeichnet, dass** die Korrelationseinrichtung (8) ein Schieberegister (7) aufweist, mittels dessen die Graustufenwerte $g_i$ der Bildelemente (4) dem Vergleicher (12) zugeführt werden.

**7.** Vorrichtung nach einem der Ansprüche 5 bis 6, **dadurch gekennzeichnet, dass** die Gewichtungsfaktoren $A_k$ der Masken $M_k$ in Maskencodetabellen abgelegt sind.

## Claims

**1.** Method for detecting barcode symbols from a sequence of bright and dark bar elements, the sequence of bright and dark bar elements being optically acquired by forming a greyscale image, the greyscale image being divided into image elements, the image elements of the greyscale image being converted into a digital signal to which the barcode symbol is allocated, the greyscale image (2) being compared for matching with a number of masks $M_k$ respectively designating different barcode symbols, and the barcode symbol being determined from the mask $M_k$ which has the highest degree of matching with the greyscale image (2), **characterized in that** weighting factors $A_k$ are assigned to each mask $M_k$, **in that** an initial image element (4.1) of the greyscale image (2) is determined, and there are then formed for the initial image element and for the respectively following image elements (4.i) of the greyscale image (2) greyscale values gi of the image elements (4.i) which are respectively multiplied by the weighting factors $A_k$ of the masks $M_k$ to give weighting values, and **in that** the greyscale image (2) is assigned the barcode symbol of that mask $M_k$ in the case of which the largest weighting sum $E_{Akmax}$ is yielded from the calculated weighting values.

**2.** Method according to Claim 1, **characterized in that** the greyscale image (2) is compared sequentially and/or simultaneously with the number of masks $M_k$, the masks $M_k$ respectively being normalized to the signal of the image elements (4.i).

**3.** Method according to either of Claims 1 and 2, **characterized in that** the greyscale image (2) is simultaneously compared with the number k of the masks $M_k$ of a predetermined barcode (A, B, C).

**4.** Method according to one of Claims 1 to 3, **characterized in that** the greyscale values $g_i$ on the image elements (4) are determined by forming a mean value over a prescribed time interval of the image element (4).

**5.** Device for detecting barcode symbols from a sequence of bright and dark bar elements, having an optical scanning unit for scanning the bar elements and providing a greyscale image, and having a decoder unit for determining the barcode symbols from the greyscale image divided into image elements, the decoder unit (1) having a correlation device (8) in which the image elements (4) of the respective greyscale images (2) are tested for matching with a number of masks $M_k$ respectively designating one barcode symbol, and the tested greyscale image (2) being assigned that barcode symbol whose mask $M_k$ has the highest degree of matching with the greyscale image (2), and the correlation device (8) having a memory (10) for storing the different masks $M_k$, the masks $M_k$ being assigned sequences of weighting factors $A_k$ which respectively define different barcode symbols, **characterized in that** the correlation device (8) has a multiplier (9) and an adder (11) and a comparator (12) so that greyscale values gi of the image elements (4) of a greyscale image (2) are multiplied by associated weighting factors $A_k$ of the masks $M_k$ to form weighting values, and **in that** the weighting values of those masks $M_k$ are added to form a weighting sum $E_{Ak}$, and **in that** the tested greyscale image (2) is allocated a barcode symbol which is such that its mask $M_k$ has the highest weighting sum $E_{Akmax}$.

**6.** Device according to Claim 5, **characterized in that** the correlation device (8) has a shift register (7) by means of which the greyscale values gi of the image elements (4) are fed to the comparator (12).

**7.** Device according to either of Claims 5 and 6, **characterized in that** the weighting factors $A_k$ of the masks $M_k$ are stored in mask code tables.

## Revendications

**1.** Procédé destiné à la reconnaissance de symboles de codes à barres à partir d'une séquence d'éléments de barres clairs et foncés, dans lequel la séquence d'éléments de barres clairs et foncés est détectée optiquement par formation d'une image de valeurs de gris, l'image de valeurs de gris est découpée en éléments d'image, les éléments d'image de l'image de valeurs de gris sont convertis en un signal numérique auquel est affecté le symbole de code à barres, l'image de valeurs de gris (2) est comparée à un certain nombre de masques $M_k$ caractérisant des symboles de codes à barres respectifs différents pour déterminer une concordance et le symbole de code à barres est déterminé à partir du masque $M_k$ qui présente le degré de concordance le plus élevé avec l'image de valeurs de gris (2), **caractérisé**
**en ce que** des facteurs de pondération $A_k$ sont associés à chaque masque $M_k$,
**en ce qu'**un élément d'image de départ (4.1) de l'image de valeurs de gris (2) est obtenu, et
**en ce que** des valeurs de niveaux de gris gi des éléments d'image (4.i) sont ensuite formées pour l'élément d'image de départ et pour les éléments d'image (4.i) respectifs suivants de l'image de valeurs de gris (2), lesquelles valeurs de niveaux de gris $g_i$ sont respectivement multipliées par les facteurs de pondération $A_k$ des masques $M_k$ en des valeurs de pondération, et
**en ce que** le symbole de code à barres du masque $M_k$ pour lequel la somme de pondération la plus élevée $E_{Akmax}$ est obtenue à partir des valeurs de pondération calculées est associé à l'image de valeurs de gris (2).

**2.** Procédé selon la revendication 1, **caractérisé en ce que** l'image de valeurs de gris (2) est comparée séquentiellement et/ou simultanément au nombre de masques $M_k$, dans lequel les masques $M_k$ sont respectivement normalisés par rapport au signal des éléments d'image (4.i).

**3.** Procédé selon les revendications 1 à 2, **caractérisé en ce que** l'image de valeurs de gris (2) est comparée simultanément au nombre k des masques $M_k$ d'un code à barres prédéterminé (A, B, C).

**4.** Procédé selon les revendications 1 à 3, **caractérisé en ce que** les valeurs de niveaux de gris $g_i$ des éléments d'image (4) sont obtenues au cours d'un intervalle de temps prédéterminé de l'élément d'image (4).

**5.** Dispositif destiné à la reconnaissance de symboles de codes à barres à partir d'une séquence d'éléments de barres clairs et foncés, comprenant une unité de balayage optique destinée au balayage des éléments de barres et à la fourniture d'une image de valeurs de gris et comprenant une unité de décodage destinée à l'obtention des symboles de codes à barres à partir de l'image de valeurs de gris découpée en éléments d'image, dans lequel l'unité de décodage (1) comporte un dispositif de corrélation (8) dans lequel il est testé si les éléments d'image (4) de l'image de valeurs de gris (2) respective concordent avec un certain nombre de masques $M_k$ caractérisant respectivement un symbole de code à barres, et un symbole de code à barres dont le masque $M_k$ présente le degré de concordance le plus élevé avec l'image de valeurs de gris (2) est associé à l'image de valeurs de gris (2) testée, et le dispositif de corrélation (8) présente une mémoire (10) destinée au stockage des différents masques $M_k$, dans lequel des séquences de facteurs de pondération $A_k$ sont associées aux masques $M_k$, lesquelles séquences définissent respectivement des symboles de codes à barres différents, **caractérisé en ce que**

le dispositif de corrélation (8) présente un multiplieur (9) et un additionneur (11) et un comparateur (12), de manière à ce que des valeurs de niveaux de gris $g_i$ des éléments d'image (4) d'une image de valeurs de gris (2) soient multipliées par des facteurs de pondération $A_k$ correspondants des masques $M_k$ en des valeurs de pondération, et **en ce que** les valeurs de pondération des mêmes masques $M_k$ sont additionnées en une somme de pondération $E_{Ak}$, et **en ce que**

l'image de valeurs de gris (2) est associée à un symbole de code à barres dont le masque $M_k$ présente la somme de pondération la plus élevée $E_{Akmax}$.

6. Dispositif selon la revendication 5, **caractérisé en ce que** le dispositif de corrélation (8) présente un registre à décalage (7) au moyen duquel les valeurs de niveaux de gris $g_i$ des éléments d'image (4) sont fournies au comparateur (12).

7. Dispositif selon l'une quelconque des revendications 5 à 6, **caractérisé en ce que** les facteurs de pondération $A_k$ des masques $M_k$ sont stockés dans des tables de codes de masques.

Fig. 1

4.1    4.6  4.7

2

S

$S_3$

Fig. 2

L

4.1  4.2  4.3  4.4  4.5
                        4.6
                      4.7

S

$g_i$

100

$g_i$

70
60
50

$S_3$

| | | | | | | |
|---|---|---|---|---|---|---|
| A3 | +2 | -1 | -1 | -1 | -1 | +2 | 0 |
| A0 | +1 | +1 | +1 | -2 | -2 | +1 | 0 |

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02101634 A
- DE 19504912 A1